(19) Europäisches Patentamt / European Patent Office / Office européen des brevets

(11) **EP 2 725 538 B1**

(12) **EUROPEAN PATENT SPECIFICATION**

(45) Date of publication and mention of the grant of the patent:
**13.12.2017 Bulletin 2017/50**

(51) Int Cl.:
*G06Q 30/02* *(2012.01)*    *G06F 17/30* *(2006.01)*

(21) Application number: **12290367.7**

(22) Date of filing: **24.10.2012**

(54) **Privacy protected dynamic clustering of end users**

Datengeschütztes dynamisches Clustering für Endbenutzer

Regroupement dynamique de confidentialité protégée d'utilisateurs finaux

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.04.2014 Bulletin 2014/18**

(73) Proprietor: **ALCATEL LUCENT**
**92100 Boulogne-Billancourt (FR)**

(72) Inventor: **Nandi, Animesh**
**560045 Bangalore (IN)**

(74) Representative: **Berthier, Karine**
**Alcatel-Lucent International**
**Patent Business**
**Site Nokia Paris Saclay**
**Route de Villejust**
**91620 Nozay (FR)**

(56) References cited:
**US-B1- 8 135 718**

**Description**

FIELD OF INVENTION

The present subject matter relates to communication systems and, particularly but not exclusively, to communication systems for privacy preservation.

BACKGROUND

Owing to the huge mass of content available over the World Wide Web, end users accessing content provided by service providers are often provided personalized assistance and data analytics by the service providers, search engines, web publishers, and advertisers for easily accessing relevant content. Conventionally, various techniques, such as content based recommendation, collaborative recommendation, and data analytics, are used to provide personalized services to the end users. In content based recommendation, the end users are recommended content, services or products which are similar to the content, services or products used or liked by the end users in the past or which match the interest or choice of the end user. In collaborative recommendation, the end user is recommended content, services or products which are similar to the content, services or products used or liked by other end users having similar or same interest or choices.

In an example of content based recommendation, a movie review website may monitor an end user to regularly observe a certain category of movies viewed by the end user, for example, animated movies. Accordingly, every time an animated movie is available for view, the end user may be provided a recommendation, such as a notification or an alert, for example, to download the movie by making relevant payments. Similarly, in collaborative recommendation, also known as collaborative filtering, service providers may provide targeted advertisements to an end user where these advertisements pertain to product or services that have been preferred by other end users who have similar interests and preferences as the end user. For example, an internet protocol television (IPTV) service provider may recommend television shows or movies to the end user, if the television shows or movies have been viewed by other end users whose interests match the interests of the end user.

Further, users need to provide their personnel data to service providers for executing data analytics applications, for example, for data mining purposes. In midst of all these techniques for data analytics and offering relevant content to the end users by the service providers, users of today feel increasingly concerned about their personal and potentially sensitive information. This is mainly because in order to benefit from the personalized services and facilitate data analytics, the end users have to reveal sensitive information, but at the same time, they are concerned about the privacy protection of the information. For example, an end user of a social networking site may not object to the use of the information of his accessing social networking sites to make anonymous recommendations to other end users and to himself regarding updates on social networking sites as such, but the end user may not want the other entities, such as other end users, the service providers, attackers and malicious parties, to know the particular URLs that the end user visited or rated.

US 8 135 718 B1 discloses systems, methods, and apparatus, including computer program products, for collaborative filtering. The method includes clustering a plurality of entities with respect to one or more latent variables in a probability distribution model of a relationship between a set of entities and a set of items, the probability distribution model comprising a probability distribution of the set of items with respect to the latent variables. The method also includes, as new items are added to the set of items, updating the probability distribution of the set of the items with respect to the latent variables, and generating an updated relationship score for an entity with respect to the set of items based on the entity's fractional membership in the clustering with respect to the latent variables and based on the updated probability distribution of the set of the items with respect to the latent variables.

SUMMARY

This summary is provided to introduce concepts related to privacy protection while dynamic clustering end users for providing personalized services and executing data analytics applications. This summary is not intended to identify essential features of the claimed subject matter nor is it intended for use in determining or limiting the scope of the claimed subject matter.

In one implementation, a method for privacy protected dynamic clustering of end users is described. The method includes ascertaining a number of end users subscribed to a cluster indicative of a group of end users having a common interest. The method further includes splitting the cluster into two or more sub-clusters based if the ascertained number of end users is greater than a predetermined explore-splitting threshold and number of end users subscribed to each of the two or more sub-clusters is greater than a predetermined cluster size threshold.

In another implementation, a middleware node is described. The middleware node includes a node processor and a cluster analysis module coupled to the processor. The cluster analysis module configured to ascertain number of end users subscribed to a cluster indicative of a group of end users having a common interest. The middleware node further includes a cluster managing module coupled to the processor. The cluster managing module configured to split the cluster into two or more sub-clusters if the ascertained number of end users is greater than a predetermined explore-splitting threshold and number of end users subscribed to each of the two or more sub-clusters is greater than a predetermined cluster size threshold.

In another implementation, a computer-readable medium having embodied thereon a computer readable program code for executing a method is described. The method comprises ascertaining a number of end users subscribed to a cluster indicative of a group of end users having a common interest. The method further includes splitting the cluster into two or more sub-clusters if ascertained number of end users is greater than a predetermined explore-splitting threshold and number of end users subscribed to each of the two or more sub-clusters is greater than a predetermined cluster size threshold.

A method for privacy protected dynamic clustering of end users is described. The method includes receiving at least one of a clustering information request, an unsubscribe message, and a subscribe to sub-cluster message from a plurality of middleware nodes. The method further includes comparing the number of requests received from the plurality of middleware nodes with a predetermined replica threshold. Further, the method includes sending a response to the plurality of middleware nodes based on the comparison

A computer-readable medium having embodied thereon a computer readable program code for executing a method is described. The method comprises receiving at least one of a clustering information request, an unsubscribe message, and a subscribe to sub-cluster message from a plurality of middleware nodes. The method further includes comparing the number of requests received from the plurality of middleware nodes with a predetermined replica threshold. Further, the method includes sending a response to the plurality of middleware nodes based on the comparison.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1(a) illustrates an exemplary network environment implementation of privacy protected dynamic clustering of end users, according to an embodiment of the present subject matter;

Figure 1(b) illustrates a hierarchy of clusters obtained, according to an embodiment of the present subject matter; and

Figure 2 illustrates a method of privacy protected clustering of end users, in accordance with an embodiment of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

System(s) and method(s) for privacy preserving clustering of end users are described. The system(s) and the method(s) can be implemented in a variety of computing devices acting as distributed servers communicating with various user devices used by end users to avail services or view content provided by a service provider. The user devices and distributed servers that can implement the described method(s) include, but are not limited to, computing devices, such as a laptop, a desktop computer, a notebook, a mobile phone, a personal digital assistant, a workstation, a mainframe computer, a set top box, a media player, central directory servers, database server, file server, print server, web server, application server, and the like. Although the description herein is with reference to personal computers and distributed servers providing recommendation services and executing data analytics applications, the method(s) and the system(s) may be implemented in other servers and computing systems providing connectivity to the end users for protecting their privacy, as will be understood by a person skilled in the art.

Although recommendation services and personalized content are provided to different end users by service providers through various networks, the method(s) and the system(s) described herein are access independent, and support multiple access types including Global System for Mobile (GSM), Wideband Code Division Multiple Access (W-CDMA), Code Division Multiple Access (CDMA), Wireless Local Area Network (WLAN), Wireline, Local Area Network (LAN), and other networks providing connectivity.

Conventionally, many service providers attempt to personalize the services provided to end users, such as services of providing content, such as videos, audio, news, advertisements, etc., based on personal details, preferences, and choices of the end users. For this purpose, the service providers use various techniques to recommend services, contents, or products and execute data analytic applications based on factors like personal information, such as age, sex, and location of the end user; the past actions of the end user, or past preferences assessed for other end users who have been identified to have similar interests as that of the end user.

For example, if an end user, say user A, has purchased a book written by a particular author, the service provider may suggest the user A to purchase other books written by the same author or other books on the same or related subjects, etc. In a similar but another conventional approach, the service provider may recommend to the end user A those contents, or products that have been preferred by other end users having an interest profile similar to that of the end user A. For the purpose of providing personalized services and for data analytics, various conventionally known methods are used to cluster the end users having similar interests into one or more interest groups.

The conventional methods of clustering implemented by the service provider require collection of information related to personal preferences, choices, etc., of the end users. Conventionally, the service providers monitor and collect information pertaining to the end users, for clustering, through various means, such as by analyzing log files, application history files or other personally identifiable information saved on the end user's client device or provided by the user while registering with the service provider. In another conventional technique, the service provider may save a text file, such as a Hyper Text Transfer Protocol (http) cookie to collect information pertaining to an end user. For example, a web portal may save user preference data including an http cookie of a web browser of an end user to store the preferences of the end user, such as font size, arrangement of display widgets, etc. Further, the user preference data may also store the browsing details of the end user and send the same to the web portal.

Thus, in an attempt to provide recommendation services, personalized content, services or products to the end user based on the end user's personal choice, the service provider often monitors and collects information pertaining to activities of the end user. In certain situations, it becomes possible to identify the end user on the basis of the information collected by the service providers. This may result in compromising the personal or confidential information of the end user and exposes the end user to potential privacy breaches or makes him the target of advertisers or spammers, etc. Further, in extreme cases, the end user may become a victim of various crimes, such as identity theft and credit card frauds.

Further, in present days when end users are connected to each other through virtual social networks via high speed communication support, end users are constantly sharing private and personal information to a broad class of applications, such as StumbleUpon©, GoogleNews™, Foursquare®, Facebook®, Yahoo®, and twitter™. Although the nature of sensitive personal information revealed depends on the type of application, such as location for location based services (LBS) and browsing history for uniform resource locator (URL) recommender systems; infusion of these applications into the all-encompassing framework of Online Social Networks (OSNs), wherein OSNs are beginning to act as a 'one-stop-shop' for offering recommendation services, is putting the personal information of users at higher risks than ever.

Recently, different approaches to preserving privacy, while still executing data analytics applications and providing personalized services, such as recommendation services; personalized content, personalized search/query, social networks, data mining, and other related services, have been proposed.

One of such existing approach involves clustering the interest profiles using homomorphic encryption based strategies. In such an approach, the interest profiles of the users are encrypted using crypto techniques, such as homomorphic encryption in order to provide privacy to the users. Such crypto techniques enable execution of protocol primitive operations, such as addition and multiplication for clustering the interest profiles using a distributed computation setting. Using the distributed computation setting allows executing multiple phases of the protocol primitive operations over user devices of a static set of end users. For instance, KMeans clustering algorithm may be implemented in privacy preserving method using the technique of homomorphic encryption. Although techniques using the homomorphic encryption facilitate privacy to the end users, such techniques are usually resource intensive and are complex to execute. Further, executing multiple phases of the protocol primitive operations over user devices of a static set of end users restricts application of such techniques in dynamic environments, such as online portals where the set of end users changes dynamically with end users constantly joining and leaving the online portals.

Further, certain approaches provide centralized solution where centralized intermediaries configured to cluster the interest profiles are un-trusted by the end users. In such situations, each end user initially pre-process the interest profile using a random projection based approach, such as encryption to obtain a projected interest profile for being communicated to the centralized intermediary. The projected interest profile are typically obtained by transforming the interest profiles using random projection functions not available with the centralized intermediaries, thus ensuring privacy of the end user's data. The random projection functions are however, shared among the end user's intending to be a part of a common cluster to ensure that all the similar interest profiles are transformed into similar projected interest profile for facilitating an efficient and correct clustering. However, sharing the random projection functions among the end users may enable leaking of the random projection function as a malicious end user may provide the random projection function to the centralized intermediaries for obtaining original interest profiles from the projected interest profiles.

Another approach for protecting private information involves clustering the interest profiles of the end users into one or more pre-defined interest groups using group ids or labels generated by a client device associated with the end user. The interest profiles of end users are clustered in a privacy preserving way using techniques, such as local sensitivity hashing (LSH) techniques or semantics-based clustering for generating labels or group id of the interest group of end users having similar interests, i.e., end users having similar interest profiles. The group id associated with the interest profile is then transmitted to a remote cluster aggregator responsible for the interest group for clustering the interest profile of the end user without having to analyze the interest profile. The approach thus discloses method for enabling privacy protecting clustering of the interest profile. However, in case of clusters having large number of users, the experience of the end users may decrease as chances of getting irrelevant recommendations and services may increase due to the variation in the likes and dislikes of the end users. Further, in case of small clusters, i.e., clusters having very less number of end users, complete privacy of the end users may not be ensured as malicious central aggregators may ascertain identity of the end users over a period of time. Thus clustering the end users in an environment where the end users are leaving and joining a cluster dynamically may affect the privacy of the end users.

Further, combining the end users in small clusters may not be beneficial as the probability for an end user to find a like-minded end user decreases in case of less numbers of users in the clusters. For instance, a person joining a particular cluster of a social networking group for peer-to-peer messaging for discussing, say, investment related issues with other users of the cluster may not benefit as the probability of finding experts in investments of his choice may be very less if there are no or very less number of users in the cluster.

According to an implementation of the present subject matter, system(s) and method(s) for privacy protected dynamic clustering of end users are described. The system(s) and method(s) ensure maintaining a minimum cluster size for providing privacy protected clustering of the end users. As described before, the system(s) and method(s) can be implemented in a variety of processing and communicating devices capable of communicating with a network according to various different standards defined for the communication. Further, the system(s) and method(s) described herein may be connected through either wired networks or wireless networks provided via different means. In one embodiment, a privacy protected network includes a plurality of end users associated with user devices for communicating with each other and distributed servers, such as one or more aggregator nodes or middleware nodes. The system(s) and method(s) may be further configured to ensure maintaining a k-anonymity condition for providing privacy protected clustering of the end users.

The system(s) and method(s) as described herein are configured to cluster end users into various interest groups, such as movies, dances, e-shopping, social networking sites with each group being subscribed by a predetermined number of minimum end users based on a predetermined cluster size threshold. The cluster size threshold may be understood as the minimum number of end users that need to be subscribed to a cluster at any given point of time. In one implementation, each cluster may be further split into sub-clusters with each sub-cluster corresponding to a particular variation of the interest group and being subscribed by number of end users greater than the cluster size threshold. According to an embodiment of the present subject matter, a middleware node interacting with the user devices may be configured to split each cluster into sub-clusters having a minimum predetermined size, i.e., having number of end users greater than the cluster size threshold. For the purpose, the middleware node may be configured to monitor the number of end users subscribed to a cluster and split the cluster into two sub-clusters in case the number of end users subscribing to the cluster crosses a predetermined value, hereinafter referred to as an explore-splitting threshold such that both the sub-clusters have the minimum predetermined number of end users.

Further, the middleware node may monitor all the sub-clusters at a current last level, i.e., the level up to which the clusters have been split to determine whether the sub-cluster can be further split. In one implementation, the middleware may be configured to split a cluster as and when the number of end users subscribed to the cluster increase to the explore-splitting threshold given by the following equation:

$$T = 2M + X \qquad (1)$$

where T is the explore-splitting threshold and is equal to minimum number of users that should be present in the cluster before a split is attempted, M is the cluster size threshold and is equal to the predetermined number of end users that must be subscribed to a cluster to satisfy a k-anonymity condition for ensuring privacy protected clustering and end user satisfaction. X is a predetermined value equal to certain percentage, say, 10%, 20%, or 45% of M, determined in a way to ensure that each of the sub-clusters of a cluster have the predetermined number of end users.

In case the number of end users in the sub-cluster at the current last level is more than the explore-splitting threshold, i.e., 2M +X, the middleware node may determine if the sub-cluster can be further split into new sub-clusters having end users greater than the cluster size threshold. Based on the determination, the middleware node may indicate the user devices of the end users to subscribe to the newly formed sub-clusters based on the cluster identifiers, as previously described. Splitting the clusters into two sub-clusters of predetermined size helps in ensuring a privacy protected clustering as an aggregator node configured to manage a particular cluster may not be able to identify the end users from among the large number of end users clustered to the cluster. Further, splitting the clusters may facilitate in improving the experience of the end users, for example, the end users may now get more relevant recommendations as compared to recommendations they got on subscribing to the bigger cluster, i.e., movies. For example, a cluster corresponding to the interest group movies may be further divided into subgroups English movies and Hindi movies, which may be further divided into sub-clusters corresponding to old English movies; new English movies and old Hindi movies; new Hindi movies, respectively. The present system(s) and method(s) allow the service providers to provide personalized content and recommendation services to the end users by clustering the end users in a privacy protected way even for small and granular level groups instead of only broad groups.

Further, in cases where the end users unsubscribe from a sub-cluster to, say, subscribe to another sub-cluster, the group size of the sub-clusters may decrease dynamically. In case the number of end users subscribed to either of the sub-clusters becomes less than the predetermined number of end users, i.e., less than 'M', the middleware node may decide to merge the particular sub-cluster and its corresponding sub-cluster at the same level and belonging to a same predecessor cluster. For instance, in the previous example of the cluster movies, if the current last level is old English movies; new English movies and old Hindi movies; new Hindi movies, an end users subscribed to any of the sub-cluster, say, old English movies becomes less than 'M'; then the middleware node may ask the end users subscribed to the sub-clusters old English movies and new English movies to merge into the sub-cluster English movies. Merging the sub-clusters into the predecessor cluster on decrease in number of the end users helps in ensuring that the k-anonymity condition for maintaining the privacy protected clustering is met even in dynamic conditions.

In operation, to subscribe to a cluster for receiving recommendation services or analytical service, the user devices of each of the end users initially assigns a cluster identifier to either the interest profile or various segment of the interest profile of the end user. In one implementation, the cluster identifiers may be assigned using a technique of locality sensitive hashing (LSH). The LSH technique involves converting each of a semantic representation of the interest profile of the end user into corresponding hash codes, i.e., the cluster identifiers, using the semantic representations and a set of hash functions defined by random values, such as a common sequence of random vectors generated at each of the user device. The cluster identifiers thus obtained may be used for clustering the end user into one or more clusters, i.e., interest groups corresponding to the cluster identifiers.

In one embodiment, user device of the end users may initially ascertain a cluster, hereinafter referred to as a core cluster, corresponding to a broad group of interest to which the end user may wish to subscribe. For example, a person interested in a particular sport, say, cricket and wishing to interact with other people in cricket or getting news alerts for cricket matches being currently played or taking place, may initially subscribe to the core cluster related to sports. The user device may thus send a subscribe message to a middleware node associated with the core cluster requesting the middleware node to cluster the end user corresponding to the user device to either the core cluster or one or more sub-clusters in case the core cluster has already been split into two or more sub-clusters. The user device may send the subscribe message to the middleware node, for example, a central aggregator, an interest group aggregator, a cluster formation node, and another user device over a communication channel, for instance, an anonymous communication channel.

On receiving the subscribe message, the middleware node may ascertain whether the core cluster to which the end user wants to subscribe has been split into sub-clusters or not. In case the core cluster has not been split, the middleware node may request the user device to subscribe to the core cluster. For instance, in the above example, the middleware node may request the user device to subscribe to the core cluster sports in case the cluster has not been split. Further, the middleware node may determine whether on the end user subscribing to the core cluster, the total number of end uses subscribed to the middleware node becomes more than the explore-splitting threshold "2M+X". Based on the determination, the middleware node may split the core cluster into sub-clusters and ask the end user and other end users subscribed to the core cluster to subscribe to any one of the sub-clusters.

Further, in case the cluster is not being split into the sub-clusters, a subscribe successful message may be sent to the end user indicating that the cluster is not split into sub-clusters and the end user is subscribed to the cluster.

Further, in case the core cluster has been spilt into sub-clusters, the middleware node may ask the user device to send a request for subscribing to either of the sub-clusters. In one implementation, the user device may ascertain the sub-cluster to which it wants to subscribe based on the cluster identifier. The cluster identifier, such as the LSH based cluster identifier previously described, may be a hash code having a predetermined bit length, with each bit corresponding to a sub-cluster at a particular level. For example, a first bit of the hash code may correspond to either of two first level sub-clusters, i.e., sub-clusters formed by splitting the core cluster, a second bit may correspond to either of two second level sub-clusters, i.e., sub-clusters formed by splitting the first level sub-cluster to which the user device had subscribed, and so on till the last possible sub-cluster. Thus, on receiving a 'subscribe to sub-cluster' message from the middleware node, the user node may move to a next bit in the hash code to identify the sub-cluster it should cluster with. In one implementation, a '0' bit may refer to a right hand sub-cluster whereas a '1' bit may refer to a left hand sub-cluster or vice-versa.

Based on the next bit in the cluster identifier, the user device may send another subscribe message request to the middleware node for clustering to the sub-cluster corresponding to the next bit. The middleware node may again check whether the sub-cluster has been further split or not. The process may continue till the middleware node ascertains a sub-cluster which has not been further split and could be subscribed to by the user device. The user device may thus subscribe to the sub-cluster ascertained by the middleware node for receiving the personalized content and recommendation services. Although the present subject matter has been explained in relation to clustering the end users based on the LSH clustering technique where the clusters are split into only two sub-cluster based on the corresponding bit of the cluster identifier generated using the random vector. It would be understood that the present subject matter can also be implemented for clustering the end users based on a content category hierarchy technique where the clusters may be split in two or more sub-clusters based on content hierarchy available with the end users for determining the cluster they may subscribe to. Further, based on the number of sub-clusters formed, the explore-splitting threshold for splitting a cluster may be given by the following equation:

$$T = B*M + X \qquad\qquad (2)$$

where B= total number of sub-clusters to be formed on splitting the cluster. Further, in one implementation, the value of B may be predetermined, say, 2 in order to increase the efficiency of the clustering technique.

Further, in one embodiment, the middleware node may be configured to determine a best split for each cluster before splitting the cluster into sub-clusters clusters. A best split may be understood as the condition where the number of end users subscribing to each of the sub-clusters is same or almost same thus providing a balanced split with reduced chances of requiring a merger in near future. For the purpose, the middleware node may provide a plurality of random vectors, for example, five different random vectors to each of the users subscribed to the cluster to be split for generating a plurality of cluster identifiers. The user devices may subsequently generate the cluster identifiers using the random vectors to determine bit, in the cluster identifier, corresponding to the desired sub-cluster level for ascertaining the sub-cluster choices corresponding to each of the random vector. The user devices may thus send the plurality of sub-cluster choices to the middleware nodes. On receiving the sub-cluster choices for each of the random vectors from the user devices, the middleware node may ascertain that for which of the random vectors a best split can be performed and may subsequently split the cluster.

Further, in one embodiment a plurality of independent replicas of the middleware node may be provided for clustering the end users such that for each cluster all the replicas may determine the cluster size for splitting or non-splitting into sub-clusters and suggesting the end users accordingly. Based on the suggestions from all the replicas, the end user may decide to subscribe to a sub-cluster, for example, when maximum number of replicas suggest a potential split of the clusters. Providing replicas of the middleware node facilitates in ensuring that the middleware node does not act maliciously by notifying a possible split of the cluster even when the cluster has less than the predetermined number of end users.

The system(s) and method(s) of the present subject matter thus facilitate in clustering the end users in a privacy protected way by ensuring that each cluster is subscribed by a predetermined number of end users greater than the explore-splitting threshold. Forming clusters of a predetermined size, i.e., having a predetermined number of end users greater than or equal to the cluster size threshold helps in ensuring privacy protected clustering as the aggregator node may not be able to identify the end users from among the predetermined number of minimum end users. Further, forming clusters with the predetermined number of minimum end users helps in improving the end user's experience as the probability for an end user to find a like-minded end user may increase in case of having the predetermined numbers of end users in the clusters.

The described methodologies can be implemented in hardware, firmware, software, or a combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof. Herein, the term "system" encompasses logic implemented by software, hardware, firmware, or a combination thereof.

For a firmware and/or software implementation, the methodologies can be implemented with modules (e.g., procedures, functions, and so on) that perform the functions described herein. Any machine readable medium tangibly embodying instructions can be used in implementing the methodologies described herein. For example, software codes and programs can be stored in a memory and executed by a processing unit. Memory can be implemented within the processing unit or may be external to the processing unit. As used herein the term "memory" refers to any type of long term, short term, volatile, nonvolatile, or other storage devices and is not to be limited to any particular type of memory or number of memories, or type of media upon which memory is stored.

In another firmware and/or software implementation, the functions may be stored as one or more instructions or code on a non-transitory computer-readable medium. Examples include computer-readable media encoded with a data structure and computer-readable media encoded with a computer program. Computer-readable media may take the form of an article of manufacturer. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" and "coupled" is used throughout for clarity of the description and can include either a direct connection or an indirect connection.

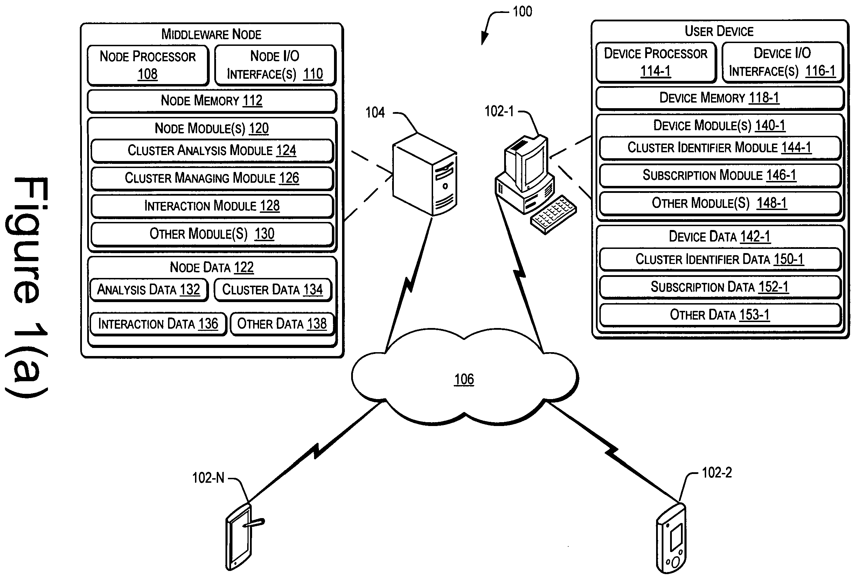

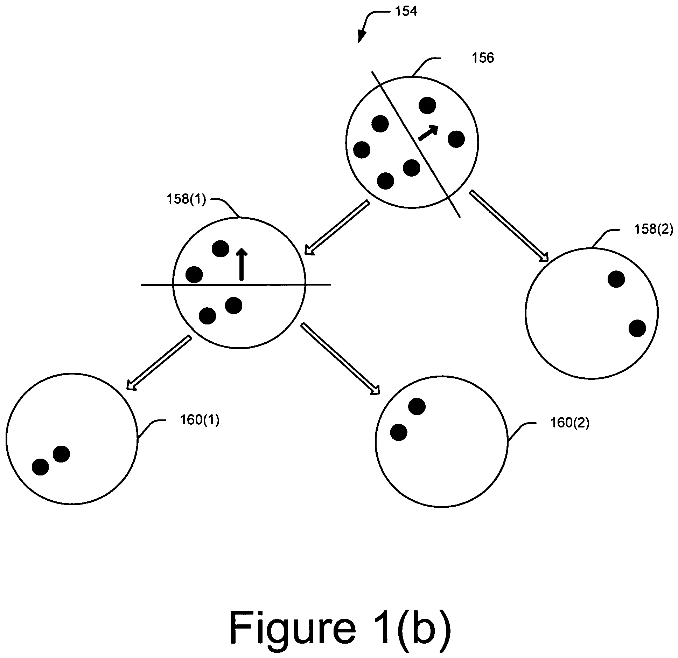

The manner in which the system(s) and method(s) of clustering user profiles for privacy protection to end users shall be implemented has been explained in details with respect to the Figures 1 to 2. While aspects of described systems and methods for clustering user profiles for providing privacy protection can be implemented in any number of different computing systems, transmission environments, and/or configurations, the embodiments are described in the context of the following exemplary system(s).

Figure 1(a) illustrates a network environment implementation of privacy protected dynamic clustering of end users, in accordance with an embodiment of the present subject matter. Figure 1(b) illustrates a hierarchy of clusters obtained in accordance to the present subject matter. The network environment 100 includes one or more user devices 102-1, 102-2, ...., and 102-N, collectively referred to as user devices 102 and individually referred to as user device 102 hereinafter, communicating with each other and a middleware node 104 through a communication network 106.

The communication network 106 may be a wireless network, or a combination of wired and wireless network. The communication network 106 can be a collection of individual networks, interconnected with each other and functioning as a single large network (e.g., the internet or an intranet). Examples of such individual networks include, but are not limited to, 3rd Generation Partnership Project (3GPP), Long Term Evolution (LTE), Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). The communication networks 106 may be any public or private network, including a local area network (LAN), a wide area network (WAN), the Internet, an intranet, a peer to peer network and a virtual private network (VPN) and may include a variety of network devices, such as routers, bridges, servers, computing devices, storage devices, etc.

The user devices 102 may be defined as User Equipments (UEs) used by end users to communicate with each other or with other network entities, such as the middleware node 104 and distributed servers, such as a central aggregator and an interest group aggregator (not shown in the figure) for facilitating data analytics and accessing various personalized services, such as recommendation services; personalized content, personalized search/query, social networks, data mining, and other related services. Examples of the user devices 102 may include, without limitation, computing devices, such as a laptop or other portable computers, a desktop computer, a notebook, network computers; a mobile phone; hand-held devices; a personal digital assistant; a workstation; a mainframe computer; a set top box; a media player; central directory servers; database server; file server; print server; web server; application server; and the like. Each of the user devices 102 works on a communication protocol as defined by the communication network 106 to which the user device 102 is coupled. Further, the user devices 102 are configured to interact with each other or other network entities, such as the middleware node 104 over the communication network 106 using one or more of communication channels. In one implementation the communication channels may be anonymous communication channels configured based on, for example, onion routing framework, such as TOR to support anonymous communication between the user devices 102 and between the user devices 102 and other network entities, such as the middleware node 104.

The middleware node 104 can be implemented as a variety of computing devices, such as a laptop computer, a desktop computer, a notebook, a workstation, a mainframe computer, a server, and the like. Although the middleware node 104 is shown as an entity, the middleware node 104 may also be implemented as a distributed computing system including multiple intermediary nodes distributed over a network where each node can be implemented as a computing devices, such as a laptop computer, a desktop computer, a notebook, a workstation, a mainframe computer, a server, and the like. Further, the intermediary nodes may be connected through an intermediate network (not shown in the figure) for the purpose of communications and exchange of data. Furthermore, one or more replicas (not shown in the figure) of the middleware node 104 may be implemented in the network environment 100 with each of the replicas performing functions similar to the middleware node 104. Although the middleware node 104 has been described as a node different from an aggregator node configured to manage a particular cluster, it would be understood that the functionalities of the middleware node 104 and the aggregator node may be combined into a single entity. For instance, in case of a collaborative filtering application, the aggregator node may be configured to provide to each member of the cluster, recommendations related to not only the interest field corresponding to the group but also related to other top rated, i.e., highly ranked interest fields of the end users who are member of the cluster. Similarly, in case of content-based recommendation applications, the aggregator node may be implemented as one or more interest group aggregators with each interest group aggregator corresponding to at least one cluster, such as movies, dances, e-shopping, social networking sites.

In one implementation, the middleware node 104 includes one or more node processor(s) 108, node I/O interface(s) 110, and a node memory 112 coupled to the node processor 108. Further, each of the user devices 102 includes device processor(s), device I/O interface(s), and a device memory coupled to the device processors. For example, the user device 102-1 includes device processor(s) 114-1, device I/O interface(s) 116-1, and a device memory 118-1 coupled to the device processor 114-1. Although, the device processor(s), the device I/O interface(s), and the device memory have been shown for only the user device 102-1, it will be understood that the same will be implemented in all the user devices 102. The device processors for all the user devices 102 are hereinafter collectively referred to as the device processor(s) 114. Simialrly, the device I/O interface(s) for all the user devices 102 are hereinafter collectively referred to as the device I/O interface(s) 116 and, the device memory for all the user devices 102 are hereinafter collectively referred to as the device memory 118.

The node processor 108 and each of the device processors 114 can be a single processing unit or a number of units, all of which could also include multiple computing units. The node processor 108 and the device processors 114 may be implemented as one or more microprocessors, microcomputers, microcontrollers, digital signal processors, central processing units, state machines, logic circuitries, and/or any devices that manipulate signals based on operational instructions. Among other capabilities, each of the node processor 108 and the device processors 114 is configured to fetch and execute computer-readable instructions and data stored in the node memory 112 and the device memory 118, respectively.

The functions of the various elements shown in the figures, including any functional blocks labeled as "processor(s)", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Each of the device I/O interfaces 116 and the node I/O interfaces 110 may include a variety of software and hardware interfaces, for example, interface for peripheral device(s), such as a keyboard, a mouse, an external memory, and a printer. Further, the node I/O interfaces 110 may enable the middleware node 104 to communicate with other network entities, such as the MME, the PDN gateway, and like. Likewise the device I/O interfaces 116 may enable the user devices 102 to communicate with other network entities, such as the middleware node 104, and like.

Each of the node memory 112 and the device memory 118 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Each of the node memory 112 and the device memory 118 also includes module(s) and data.

In one implementation, the middleware node 104 includes node modules 120 and node data 122. The node modules 120, amongst other things, include routines, programs, objects, components, data structures, etc., which perform particular tasks or implement particular abstract data types. The node modules 120 may also be implemented as, signal processor(s), state machine(s), logic circuitries, and/or any other device or component that manipulate signals based on operational instructions.

Further, the node modules 120 can be implemented in hardware, instructions executed by a processing unit, or by a combination thereof. The processing unit can comprise a computer, a processor, such as the node processor 108, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the node modules 120 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

The node module(s) 120 further include a cluster analysis module 124, a cluster managing module 126, an interaction module 128, and other modules 130. The other module(s) 130 may include programs or coded instructions that supplement applications and functions of the middleware node 104.

The node data 122, amongst other things, serves as a repository for storing data processed, received, associated, and generated by one or more of the node module(s) 120. The node data 122 includes, for example, analysis data 132, cluster data 134, interaction data 136, and other data 138. The other data 138 includes data generated as a result of the execution of one or more modules in the other module(s) 130.

Further, each of the user devices 102 includes device modules 140 and device data 142. The device modules 140, amongst other things, include routines, programs, objects, components, data structures, etc., which perform particular tasks or implement particular abstract data types. The device modules 140 may also be implemented as, signal processor(s), state machine(s), logic circuitries, and/or any other device or component that manipulate signals based on operational instructions.

Further, the device modules 140 can be implemented in hardware, instructions executed by a processing unit, or by a combination thereof. The processing unit can comprise a computer, a processor, such as the device processor 114, a state machine, a logic array or any other suitable devices capable of processing instructions. The processing unit can be a general-purpose processor which executes instructions to cause the general-purpose processor to perform the required tasks or, the processing unit can be dedicated to perform the required functions.

In another aspect of the present subject matter, the device modules 140 may be machine-readable instructions (software) which, when executed by a processor/processing unit, perform any of the described functionalities. The machine-readable instructions may be stored on an electronic memory device, hard disk, optical disk or other machine-readable storage medium or non-transitory medium. In one implementation, the machine-readable instructions can be also be downloaded to the storage medium via a network connection.

Each of the device module(s) 140 further includes a cluster identifier module 144, a subscription module 146, and other module(s) 148. For example, the user device 102-1 includes a cluster identifier module 144-1, a subscription module 146-1, and other module(s) 148-1. The other module(s) 148 may include programs or coded instructions that supplement applications and functions of the user device 102. As mentioned previously, each of the user devices 102 are functionally alike and thus although, the cluster identifier module, the subscription module, and the other module(s) have been depicted in Figure 1(a) for only the user device 102-1, it will be understood that the same will be implemented in each of the user devices 102.

The device data 142, amongst other things, serves as a repository for storing data processed, received, associated, and generated by one or more of the device module(s) 140. Each of the device data 142 further includes cluster identifier data 150, subscription data 152, and other data 153. For example, the device data 142-1 of the user device102-1 includes cluster identifier data 150-1, subscription data 152-1, and other data 153-1. The other data 153-1 includes data generated as a result of the execution of one or more modules in the other module(s) 148-1.

According to an embodiment, the middleware node 104 is configured to cluster the end users into one or more clusters corresponding to interest groups, such as movies, dances, e-shopping, and social networking sites while maintaining a k-anonymity condition in a dynamic environment where the end users are dynamically joining and leaving the clusters. It will be understood that the k-anonymity condition defines that each cluster should be subscribed by a predetermined number of minimum end users, such that an aggregator node configured to manage a particular cluster may not be able to identify the end users from among the large number of end users clustered to the cluster also improve the experience of the end users. Further, the middleware node 104 may split each cluster into sub-clusters corresponding to a particular variation of the interest group, for example, in order to form more fine grained groups instead of oversized clusters. In one implementation, the middleware node 104 may be configured to split a cluster, also referred to as a parent cluster, such that each sub-cluster has a minimum predetermined size, i.e., is having number of end users greater than a cluster size threshold. The cluster size threshold may be understood as the minimum number of end users that need to be subscribed to a cluster at any given point of time.

For instance, Figure 1(b) illustrates a hierarchy of clusters 154 obtained in accordance to the present subject matter. As illustrated, the hierarchy of clusters 154 includes a root cluster 156 representing a basic or a broad group of interest to which the end user may wish to subscribe. The root cluster 156 may be further split by the middleware node 104 into sub-clusters 158-1 and 158-2 such that both the sub-clusters 158-1 and 158-2 are subscribed by a predetermined number of minimum end users. The root cluster 156 may thus be considered as a parent cluster split into the sub-clusters 158-1 and 158-2. Further, the sub-clusters 158-1 may be referred to as a parent cluster on being split into sub-clusters 160-1 and 160-2 by the middleware node 104. Although, the Figure 1(b) illustrates splitting a cluster into two sub-clusters, it may be understood that a cluster may be split into more than two sub-clusters, for example, while using content ontology hierarchies.

In one implementation, the cluster analysis module 124 of the middleware node 104 may be configured to monitor all the clusters at a current last level, i.e., the level up to which the clusters have been split, to ascertain the number of end users subscribed to the cluster. For instance, considering that the sub-cluster 158-1 has not been split into the sub-clusters 160-1 and 160-2, the cluster analysis module 124 may monitor the sub-cluster 158-1 to ascertain the number of end users subscribing to this sub-cluster 158-1 to determine whether the sub-cluster 158-1 can be split into the sub-clusters 160-1 and 160-2. In one implementation, the cluster analysis module 124 may be configured to request the cluster managing module 126 to initiate an explore-split phase whenever it determines that the number of end users subscribed to a cluster have crossed a predetermined value, hereinafter referred to as an explore-splitting threshold. The cluster analysis module 124 may further update the number of end users subscribed to the cluster in the analysis data 132. In one implementation, the cluster managing module 126 may be configured to compare the ascertained number of end users with the explore-splitting threshold and initiate the explore-split phase as and when the number of end users subscribed to the cluster, say, the sub-cluster 158-1 reaches the explore-splitting threshold obtained based on the equation (2), as described earlier. The equation (2) has been reproduced here for the sake of clarity and explanation:

$$T = B*M + X \tag{2}$$

where K= total number of users in the cluster, B is equal to the number of sub-clusters to be formed by splitting the parent cluster, and X is a predetermined value equal to a certain percentage, say, 10%, 20%, or 45% of M, determined in a way to ensure that each of the sub-clusters of a cluster have the predetermined number of minimum end users. M is the cluster size threshold and is equal to the predetermined number of end users that must be subscribed to a cluster to satisfy a k-anonymity condition for ensuring privacy protected clustering and end user satisfaction, for example, 100, 500, or 1000 number of end users. For instance, as per the example illustrated in the Figure 1(b), B may be equal to 2. Further, the cluster size threshold 'M' may be determined based on various factors, such as interest group type, number of end users, number of interest groups, and the like..

Based on the determination, the cluster managing module 126 may ascertain that the cluster, say, the sub-cluster 158-1 may be split into sub-clusters. In case the number of end users subscribed to the cluster is less than the explore-splitting threshold 'T', the cluster analysis module 124 may initiate a not-ready-to-split phase and continue monitoring the cluster. The cluster managing module 126 may subsequently determine whether the cluster can be split into two or more sub-clusters.

Further, as previously described, prior to splitting the cluster, the cluster managing module 126 may initiate the explore-split phase. Initiating the explore-split phase helps the cluster managing module 126 in determining whether each of the sub-clusters, intended to be formed, shall be subscribed by the predetermined number of minimum end users or not. As will be understood, the cluster managing module 126 may itself not be able to ascertain how many end users may wish to subscribe to a particular sub-cluster due to the privacy preserving clustering being performed where the user profiles and the cluster identifiers are available only with the end user. The cluster managing module 126 may thus initiate the explore-split phase and ask each of the end users to provide their choices of the fine grained sub-cluster.

For the purpose, the cluster managing module 126 may request the interaction module 128 to send a clustering information request to the user devices 102 subscribed to the current cluster under analysis, say, the sub-cluster 158-1 to indicate the sub-cluster they intend to subscribe from either of the sub-clusters, say, the sub-clusters 160-1 and 160-2. The subscription module 146 of the user devices 102 may subsequently send, to the interaction module 128, the clustering information indicating the sub-cluster they intend to subscribe to based on the cluster identifier. Based on the clustering information from each of the user devices 102, the cluster managing module 126 may ascertain, for each of the sub-clusters, the number of end users that wish to subscribe to the sub-cluster to determine whether the number of end users subscribed to each of the sub-clusters is more than the cluster size threshold 'M'.

In one implementation, an end user that does not wish to subscribe to a sub-cluster may not send the clustering information. In such a case the cluster managing module 126 may make the determination of the number of end users subscribed to each of the sub-clusters being more than the cluster size threshold 'M' based on the clustering information received only from the end users willing to subscribe to a sub-cluster. Further, while subscribing to a sub-cluster, all the end users may still remain subscribed to the parent cluster in order to maintain the k-anonymity condition in the parent cluster.

In case each of the sub-clusters may be subscribed by end users more than the cluster size threshold 'M', the cluster managing module 126 may decide to form the sub-clusters. The cluster managing module 126 may thus split the cluster into the sub-clusters and subsequently request each of the end users to subscribe to the sub-clusters by sending a subscription request. For instance, in case the cluster managing module 126 determines that the each of the sub-clusters 160-1 and 160-2 may be subscribed by at least M number of end users, the cluster managing module 126 may split the sub-cluster 158-1 into the sub-clusters 160-1 and 160-2. The sub-cluster 158-1 in such a case may be referred to as a parent cluster for the sub-clusters 160-1 and 160-2, while the sub-clusters 160-1 and 160-2 may be referred to as corresponding clusters having a same parent cluster 158-1. The cluster managing module 126 may further update the information regarding the number of end users and the new formed sub-clusters in the cluster data 134. The middleware node 104 is thus configured to split the clusters into sub-clusters of predetermined size to maintain K-anonymity, thus ensuring privacy protected clustering to prevent an aggregator node configured to manage a particular cluster from identifying the end users from among the large number of end users clustered to the cluster. Splitting the clusters may also benefit the end users as the end users may now get more relevant recommendations as compared to recommendations they would have received while subscribing to the parent cluster, thus also facilitating in improving the experience of the end users.

Further, in case the number of end users subscribed to a sub-cluster, say, the sub-cluster 160-1 becomes less than the cluster size threshold, the cluster managing module 126 may merge the sub-cluster and its corresponding other sub-clusters belonging to a same parent cluster, i.e., the sub-cluster 160-2. For instance, in cases where the end users unsubscribe from a sub-cluster to, say, subscribe to another sub-cluster. It would be appreciated that the other sub-cluster may be a sub-cluster of the same parent cluster or, a sub-cluster of another parent cluster. The cluster managing module 126 may thus be configured to merge such sub-clusters with their corresponding sub-clusters into the parent cluster to ensure that the k-anonymity condition for maintaining the privacy protected clustering is met even in dynamic conditions. For the purpose, the cluster analysis module 124 may be configured to monitor all the sub-clusters to ascertain whether the number of end users subscribed to the sub-clusters decrease to a value less than the cluster size threshold 'M'. In case the number of end users subscribed to a particular sub-cluster becomes less than 'M', the cluster analysis module 124 may indicate to the cluster managing module 126 that the particular sub-cluster needs to be merged.

On merging the sub-clusters into their parent cluster, the cluster managing module 126 may request the interaction module 128 to send an unsubscribe message to the user devices 102 to unsubscribe from the sub-clusters. Further, the cluster managing module 126 may update the cluster data 134 to indicate that the parent cluster is at present in a not-ready-to-split phase as the potential sub-clusters do not satisfy the splitting condition of having the end users more than the cluster size threshold. In other words, the number of users subscribing to the parent cluster either do not meet the pre-determined explore-splitting threshold 'T' determined based on the equation (2), or would not result in enough end users in a single sub-cluster consequently formed after splitting. The cluster analysis module 124 may thus wait for some additional number of end users to join the parent cluster before analyzing whether the parent cluster can be split again.

In one implementation, the cluster analysis module 124 may wait for the number of end users subscribed to the parent cluster to increase to a value given by the following equation:

$$T = B*M + X + Xincrement \qquad (3)$$

where, Xincrement is a predetermined value equal to a certain percentage, say, 5%, 10%, or 20%, of M, determined in a way to ensure that each time a cluster is in a not-ready-to-split phase indicating that the cluster can not be split further, the cluster analysis module 124 does not explore-split phase immediately as in such a case chances of having a successful split may be very less. For example, it may happen that the sub-clusters may not be subscribed by 'M' users in spite of the parent cluster having 'BM+X' number of end users. The middleware node 104 thus ensures that k-anonymity condition for clustering is always met while allowing the service providers to provide personalized content and recommendation services to the end users by clustering the end users in a privacy protected way even for small and granular level groups instead of only broad groups.

In operation, to subscribe to a cluster for receiving recommendation services or analytical service, the cluster identifier module 144 of the user devices 102 is configured to assign a cluster identifier to either the interest profile or various segment of the interest profile of the end user. It would be appreciated that the interest profile of the end user is generated based on the personal choices and preferences of the end user to provide personalized content and recommendation services, and consequently subscribe to an aggregator node. In one implementation, the cluster identifier module 144 may assign the cluster identifiers using a technique of locality sensitive hashing (LSH). The LSH technique, as will be understood, involves converting each of a semantic representation of the interest profile of the end user into corresponding hash codes, i.e., the cluster identifiers, using the semantic representations and a set of hash functions. The hash functions may be defined by random values, such as a common sequence of random vectors generated at each of the user device 102 or provided by a central server. The cluster identifier module 144 may thus obtain the cluster identifiers for identifying the clusters to which the corresponding end user may be clustered. The cluster identifier module 144 may further save the cluster identifier in the cluster identifier data 150.

Based on the cluster identifier, the subscription module 146 may initially ascertain a core cluster, say the root cluster 156, corresponding to the broad group of interest to which the end user may wish to subscribe. The subscription module 146 may subsequently send a subscribe message to the interaction module 128 of the middleware node 104 associated with the core cluster for clustering the end user corresponding to the user device 102 to the core cluster. The subscription module 146 may send the subscribe message to the middleware node 104 over a communication channel, for instance, an anonymous communication channel. For instance, the subscription module 146 may send a subscription message to the interaction module 128 for being subscribed to the root cluster 156. The interaction module 128, on receiving the subscription request, may save the subscription message in the interaction data 136 and indicate the cluster managing module 126 the end user's request to be clustered to the core cluster identified in the subscription message.

On receiving the subscribe message, the cluster managing module 126 may ascertain whether the core cluster, i.e., the root cluster 156 to which the end user wants to subscribe has been split into sub-clusters or not. In case the core cluster has been spilt into sub-clusters, the cluster managing module 126 may send a 'subscribe to sub-cluster message' asking the subscription module 146 to request for subscribing to either of the sub-clusters. On receiving the 'subscribe to sub-cluster message', the subscription module 146 may ascertain the sub-cluster to which it wants to subscribe based on the cluster identifier. In one implementation, the cluster identifier may be a hash code obtained using the LSH technique and having a predetermined bit length, with each bit corresponding to a sub-cluster at a particular level. For example, a first bit of the hash code may correspond to either of two first level sub-clusters, i.e., sub-clusters formed by splitting the core cluster, say, the sub-clusters 158-1 and 158-2. A second bit may correspond to either of two second level sub-clusters, i.e., sub-clusters formed by splitting the first level sub-cluster to which the user device had subscribed, say, the sub-clusters 160-1 and 160-2 and so on till the last possible sub-cluster. Thus, each time on receiving the "subscribe to sub-cluster' message, the subscription module 146 may move to a next bit from its current position in the hash code to identify the sub-cluster it should next cluster with. In one implementation, a '0' bit may refer to a right hand sub-cluster, say, 160-2 whereas a '1' bit may refer to a left hand sub-cluster, say, 160-1 or vice-versa.

Although the present subject matter has been explained in relation to clustering the end users based on the LSH clustering technique where the cluster identifiers are in the form of hash codes representing the sub-clusters. It would be understood that the present subject matter can also be implemented for clustering the end users based on a content category hierarchy technique where the end users may subscribe to sub-clusters based on content hierarchy available with the end users determining the cluster they may subscribe to based on the content of the cluster. Further, the predetermined number for splitting a cluster according to the cluster identifier having bits and generated using the LSH technique may be given by the equation (1) described earlier, which has been reproduced below for the sake of explanation:

$$T = 2M + X \qquad\qquad (1)$$

Further, the subscription module 146 may send another subscribe message request to the interaction module 128 for clustering to the sub-cluster corresponding to the next bit in the cluster identifier. The cluster managing module 126 may subsequently check whether the sub-cluster selected by the subscription module 146 has been further split or not. For instance, in case the subscription module 146 requests the cluster managing module 126 for subscription to the sub-cluster 158-2, the cluster managing module 126 may send a subscribe successful message to the subscription module 146 allowing the subscription module 146 to subscribe to the sub-cluster 158-2 as it has not been further split. Otherwise, the process may continue till the subscription module 146 requests for subscription to a sub-cluster which has not been further split. Further, the subscription module 146 may accordingly update in the subscription data 152, the level of its subscription in the cluster hierarchy 154.

On the other hand, in case the core cluster has not been split, the cluster managing module 126 may send the subscribe successful message to the subscription module 146 asking the end user to subscribe to the core cluster. Further, in case a cluster, say, a core cluster a sub-cluster for which a subscription message has been received has not been split, the cluster managing module 126 may determine whether the cluster may be split into sub-clusters on the end user subscribing to the core cluster.

For the purpose, the cluster managing module 126 may ascertain whether the total number of end users subscribed to the cluster will become more than the explore-splitting threshold , upon the end user subscribing to the core cluster. In case the number of end users remains less than the explore-splitting threshold, the cluster managing module 126 may request the user device 102 to subscribe to the cluster. In case the cluster managing module 126 ascertains that the total number of end users subscribed to the cluster becomes more than the explore-splitting threshold, the cluster managing module 126 may split the cluster into sub-clusters. The cluster managing module 126 may subsequently send a 'subscribe to sub-cluster message' asking the end user and other end users subscribed to the cluster to subscribe to the newly formed sub-clusters.

Further, in one embodiment, the cluster managing module 126 may be configured to determine a best split for each cluster before splitting the cluster into sub-clusters clusters. A best split may be understood as the condition where the number of end users subscribing to each of the sub-clusters is same or almost same, thus providing a balanced split. Providing a balanced split may not only reduce chances of requiring a merger in near future but may also help in increasing the user experience. In one implementation, the cluster managing module 126 may provide a plurality of random vectors, for example, five different random vectors to each of the end users for generating a plurality of cluster identifiers. The cluster identifier module 144 of each of the user devices 102 may subsequently generate a plurality of cluster identifiers using the random vectors such that for each random vector a corresponding cluster identifier is generated.

Based on the cluster identifiers, the subscription module 146 may determine the bit, in the cluster identifier, corresponding to the desired sub-cluster level for ascertaining the sub-cluster choices corresponding to each of the random vector. The subscription module 146 may thus send the plurality of sub-cluster choices to the middleware node 104. On receiving the sub-cluster choices for each of the random vectors from each of the user devices, the cluster managing module 126 may determine the random vectors for which a best split can be performed. The cluster managing module 126 may subsequently split the cluster asking the user device 102 to subscribe to the sub-clusters in accordance to the cluster identifier corresponding o the determined random vector.

Further, as previously described, one or more independent replicas of the middleware node 104 may be implemented for clustering the end users in the network environment 100. Each of the replicas may be configured to perform functions similar to the middleware node 104 such that for each cluster all the replicas may determine the cluster size for splitting or non-splitting the cluster into sub-clusters. Each of the user devices 102 may thus receive suggestions from all the replicas regarding whether the cluster may be split or not and the user device 102 should thus subscribe to the cluster or one of its sub-cluster. The subscription module 146 of the user device 102 may subsequently analyze the suggestions to determine whether to subscribe to the cluster or allow the middleware node 104 to split the cluster and then subscribe to the sub-cluster. For example, the subscription module 146 may allow the middleware node 104 to split the cluster when maximum number of replicas suggest a potential split. For instance, all the middleware nodes 104 suggesting a split may send the clustering information request indicating the possibility of forming the sub-clusters. The subscription module 146 may subsequently compare the number of requests received from the middleware nodes 104 sending the clustering information request with a replica threshold to determine if the clustering information request has been received from a number of middleware nodes 104 greater than the replica threshold. Based on the determination the subscription module 146 may send the clustering information to the middleware nodes 104 indicating their choice of sub-cluster. Similarly, the middleware nodes 104 may send the unsubscribe message and the subscribe to sub-cluster message to the end users for unsubscribing from the sub-clusters or subscribing to the sub-clusters, respectively. The subscription module 146 may subsequently send a response to the plurality of middleware nodes indicating unsubscription or subscription to the sub-clusters.

Thus, providing replicas of the middleware node 104 facilitates in ensuring that the middleware node 104 does not act maliciously by notifying a possible split of the cluster even when the number of end users subscribed to the cluster are less than the predetermined number of end users.

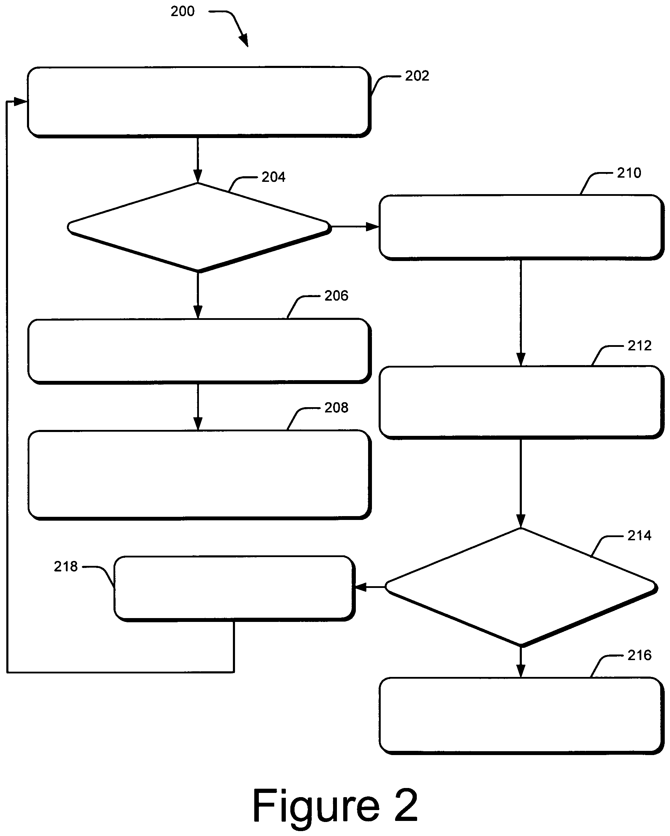

Figure 2 illustrates a method 200 of privacy protected clustering of end users, in accordance with an embodiment of the present subject matter. The order in which the method is described is not intended to be construed as a limitation, and any number of the described method blocks can be combined in any order to implement the method 200 or any alternative methods. Additionally, individual blocks may be deleted from the methods without departing from the scope of the subject matter described herein. Furthermore, the method(s) can be implemented in any suitable hardware, software, firmware, or combination thereof.

The method(s) may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

A person skilled in the art will readily recognize that steps of the method(s) can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. The embodiments are also intended to cover both communication network and communication devices configured to perform said steps of the exemplary method(s).

At block 202, number of end users subscribed to a cluster are ascertained. In one implementation, a middleware node, for example, the middleware node 104 configured to manage clustering of a particular core cluster may monitor the cluster to ascertain the number of end users subscribed to the cluster at a current last level in the cluster hierarchy. A cluster analysis module, for example, the cluster analysis module 124 may be configured to monitor the cluster at the last level and update the number of end users as and when an end user joins or leaves the cluster. The number of end users thus ascertained may be updated in the analysis data.

At block 204, a determination is made to ascertain whether the number of end users is greater than a predetermined explore-splitting threshold. For instance, the analysis data is accessed to determine whether the number of end users subscribed to the clusters is more than the explore-splitting threshold '2M+X', as given by the equation (1). If the middleware node 104 determines that the number of end users is less than the explore-splitting threshold, which is the 'No' path from the block 204, it is determined whether the number of end users is less than a predetermined cluster size threshold at block 206. In one implementation, the middleware node 104 makes the determination if the cluster is a non-core cluster.

At block 208, the cluster and a corresponding cluster having a same parent cluster as the cluster are merged into the parent cluster in case the number of end users is less than the cluster size threshold by requesting end users, subscribed to the cluster and the corresponding cluster, to unsubscribe from the cluster and the corresponding cluster, respectively. For example, on determining that the number of end users subscribed to the cluster is less than the predetermined number of end users, the middleware node 104 may ascertain whether the cluster is a core cluster. In case the cluster is not a core cluster, the middleware node 104 may merge the cluster and a corresponding cluster, i.e., the cluster having the same parent cluster as the cluster being analyzed, into the parent cluster. The end users subscribed to the cluster and the corresponding cluster may be subsequently requested to subscribe to the parent cluster.

In case at block 204 it is determined that the number of end users is more than the explore-splitting threshold, which is the 'Yes' path from the block 204, a clustering information request is sent to the end users at block 210. For example, the middleware node 104 may send the clustering information request is sent to the end users asking the end users to indicate the sub-cluster they intend to subscribe to, from either of sub-clusters that may be formed on splitting the cluster.

At block 212, clustering information indicating the sub-cluster the end user intends to subscribe to is received. In one implementation, the user devices 102 corresponding to each of the end user may send the clustering information to the middleware node 104 indicating the sub-cluster they intend to subscribe to based on, for example, a cluster identifier.

At block 214, a determination is made to ascertain whether the number of end users intending to subscribe to each sub-cluster is greater than a cluster size. If the middleware node 104 determines that the number of end users intending to subscribe to each sub-cluster is less than the cluster size, which is the 'No' path from the block 214, the middleware node 104 initiates a not-ready-to-split phase and sends an explore-splitting unsuccessful message to the end users at block 218 and continues monitoring the cluster at block 202.

In case it is determined that the number of end users intending to subscribe to each sub-cluster is greater than the cluster size, which is the 'Yes' path from the block 214, the cluster is split into the sub-clusters at block 216. In one implementation, the end users subscribed to the cluster are requested to subscribe to the sub-cluster to which the end user intended to subscribe. For example, on determining that the cluster can be split into sub-clusters, the middleware node 104 may split the cluster into the sub-clusters and request the end users subscribed to the cluster to subscribe to one of the sub-clusters. In one implementation, the end users may subscribe to one of the sub-clusters based on a cluster identifier generated by user devices corresponding to the end users.

Although embodiments for privacy protected dynamic clustering of end users have been described in a language specific to structural features and/or method(s), it is to be understood that the invention is not necessarily limited to the specific features or method(s) described. Rather, the specific features and methods are disclosed as exemplary embodiments for privacy protected dynamic clustering of end users.

**Claims**

1. A method for privacy protected dynamic clustering of end users (102), the method comprising:

   ascertaining (202) a number of end users subscribed to a cluster, wherein the cluster is indicative of a group of end users having a common interest; and
   splitting (216) the cluster into two or more sub-clusters if the ascertained number of end users is greater than a predetermined explore-splitting threshold, wherein number of end users subscribed to the two or more sub-clusters is greater than a predetermined cluster size threshold.

2. The method as claimed in claim 1 further comprises initiating (218) a not-ready-to-split phase for the ascertained number of end users being less than the predetermined explore-splitting threshold.

3. The method as claimed in any of the preceding claims further comprising:

   sending (210) a clustering information request to the end users subscribed to the cluster; and
   receiving (212) clustering information from the end users, wherein the clustering information indicates a sub-cluster from among the two or more sub-clusters to which the end user intends to subscribe.

4. The method as claimed in any of the preceding claims, wherein the method further comprises:

   comparing (206), for the two or more sub-clusters, the number of end users subscribed to the sub-cluster with the predetermined cluster size threshold;
   merging (208), based on the comparing, the two or more sub-clusters into the cluster, for the number of end users subscribed to the sub-cluster being less than the predetermined cluster size threshold.

5. The method as claimed in any of the preceding claims, wherein the method further comprises requesting the end users to subscribe to at least one of the two or more sub-clusters.

6. The method as claimed in claim 1, wherein the method further comprises:

   receiving a subscription message from an end user for subscribing to the cluster; and
   sending a subscribe to sub-cluster message to the end user, on the cluster being split into the two or more sub-clusters, wherein the subscribe to sub-cluster message requests the end user to subscribe to any one of the two or more sub-clusters.

7. The method as claimed in claim 1, wherein the method further comprises:

   providing a plurality of random vectors to the end users for generating a corresponding cluster identifier, wherein the cluster identifier includes a plurality of bits, and wherein the plurality of bits indicates the sub-cluster to which the end user subscribes at a particular level of cluster hierarchy;
   receiving, from the end users, a plurality of subscription messages corresponding to the plurality of random vectors for subscribing to one of the two or more sub-clusters; and
   determining, based on the receiving, a best split condition for splitting the cluster into the two or more clusters, wherein the best split condition indicates a split of the cluster with the number of end users subscribing to the two or more sub-clusters being same.

8. The method as claimed in claim 1, wherein the method further comprises:

   receiving at least one of a clustering information request, an unsubscribe message, and a subscribe to sub-cluster message from a plurality of middleware nodes (104),
   comparing the number of requests received from the plurality of middleware nodes with a predetermined replica threshold; and

   sending a response to the plurality of middleware nodes based on the comparison.

9. A middleware node (104) comprising:

   a node processor (108); and
   a cluster analysis module (124) coupled to the processor (108), the cluster analysis module (124) configured to ascertain number of end users (102) subscribed to a cluster, wherein the cluster is indicative of a group of end users having a common interest; and
   a cluster managing module (126) coupled to the processor (108), the cluster managing module (126) configured to split the cluster into two or more sub-clusters if the ascertained number of end users is greater than a predetermined explore-splitting threshold, and number of end users subscribed to the two or more sub-clusters is greater than a predetermined cluster size threshold.

10. The middleware node (104) as claimed in claim 9 further comprising an interaction module (128) configured to request the end users to subscribe to at least one of the two or more sub-clusters.

11. The middleware node (104) as claimed in claim 9 further comprising an interaction module (128) configured to:

    send a clustering information request to the end users subscribed to the cluster; and
    receive clustering information from the end users, wherein the clustering information indicates a sub-cluster from among the two or more sub-clusters to which the end user intends to subscribe.

12. The middleware node (104) as claimed in any one of claims 9 to 11, wherein the cluster managing module (126) is further configured to merge the two or more sub-clusters into the cluster on the number of end users subscribed to any one of the two or more sub-clusters being less than the predetermined cluster size threshold.

13. The middleware node (104) as claimed in any one of claims 9 to 12, wherein the cluster analysis module (124) is further configured to initiate a not-ready-to-split phase for the ascertained number of end users being less than the predetermined explore-splitting threshold.

14. A computer-readable medium having embodied thereon a computer program for executing a method of privacy protected dynamic clustering of end users, the method comprising:

    ascertaining number of end users subscribed to a cluster, wherein the cluster is indicative of a group of end users having a common interest; and
    splitting the cluster into two or more sub-clusters if the ascertained number of end users is greater than a predetermined explore-splitting threshold, wherein number of end users subscribed to the two or more sub-clusters is greater than a predetermined cluster size threshold.

15. The computer-readable medium as claimed in claim 14, wherein the method further comprises:

    receiving at least one of a clustering information request, an unsubscribe message, and a subscribe to sub-cluster message from a plurality of middleware nodes (104),
    comparing the number of requests received from the plurality of middleware nodes with a predetermined replica threshold; and
    sending a response to the plurality of middleware nodes based on the comparison.

**EP 2 725 538 B1**

**Patentansprüche**

1. Verfahren für das datengeschützte dynamische Clustering der Endnutzer (102), wobei das Verfahren umfasst:

   Bestimmung (202) einer Anzahl von Endnutzern, die an einem Cluster teilnehmen, wobei der Cluster indikativ ist für eine Gruppe von Endnutzern, die ein gemeinsames Interesse haben; und Splitting (216) des Clusters in zwei oder mehr Subcluster, wenn die festgestellte Anzahl von Endnutzern größer ist als ein vorbestimmter Explore-Splitting-Schwellenwert, wobei die Anzahl von Endnutzern, die an zwei oder mehr Subclustern teilnehmen, größer ist als ein vorbestimmter Clustergrößenschwellenwert.

2. Verfahren nach Anspruch 1, weiterhin umfassend das Initiieren (218) einer Not-ready-to-split-Phase, wenn die festgestellte Anzahl von Endnutzern geringer ist als der vorbestimmte Explore-Splitting-Schwellenwert.

3. Verfahren nach einem beliebigen der vorhergehenden Ansprüche, weiterhin umfassend:

   Senden (210) einer Cluster-Informationsanforderung an die am Cluster teilnehmenden Endnutzer; und
   Empfangen (212) von Cluster-Information von den Endnutzern, wobei die Cluster-Information einen Subcluster aus den zwei oder mehr Subclustern anzeigt, an denen der Endnutzer teilzunehmen versucht.

4. Verfahren nach einem beliebigen der vorhergehenden Ansprüche, wobei das Verfahren weiterhin umfasst:

   Vergleichen (206), für die zwei oder mehr Subcluster, der Anzahl der Endnutzer, die an dem Subcluster teilnehmen, mit dem vorbestimmten Clustergrößenschwellenwert;
   Verschmelzen (208) auf Grundlage des Vergleichs, der zwei oder mehr Subcluster zu einem Cluster, wenn die Anzahl der Endnutzer, die an dem Subcluster teilnehmen, geringer ist als der vorbestimmte Clustergrößenschwellenwert.

5. Verfahren nach einem beliebigen der vorhergehenden Ansprüche, wobei das Verfahren weiterhin umfasst das Anfordern von den Endnutzern, an mindestens einem der zwei oder mehr Subclustern teilzunehmen.

6. Verfahren nach Anspruch 1, wobei das Verfahren weiterhin umfasst:

   Empfangen einer Teilnahmenachricht von einem Endnutzer zum Teilnehmen an dem Cluster; und
   Senden einer Subcluster-Teilnahme-Nachricht an den Endnutzer für den Cluster, der in zwei oder mehr Subcluster geteilt werden soll, wobei die Subcluster-Teilnahme-Nachricht den Endnutzer auffordert, an einem beliebigen der zwei oder mehreren Subcluster teilzunehmen.

7. Verfahren nach Anspruch 1, wobei das Verfahren weiterhin umfasst:

   Bereitstellen einer Vielzahl von randomisierten Vektoren an die Endnutzer zum Erzeugen eines entsprechenden Cluster-Identifizierers, wobei der Cluster-Identifizierer eine Vielzahl von Bits einschließt, und wobei die Vielzahl von Bits den Subcluster anzeigt, an dem der Endnutzer auf einer besonderen Stufe der Clusterhierarchie teilnimmt;
   Empfangen, von den Endnutzern, einer Vielzahl von Teilnahmenachrichten, die der Vielzahl randomisierter Vektoren entsprechen, zum Teilnehmen an einem der zwei oder mehr Subcluster; und
   Bestimmen, auf Grundlage des Empfangens, einer besten Split-Bedingung für den Cluster in zwei oder mehr Cluster, wobei die beste Split-Bedingung einen Split des Clusters mit der gleichen Anzahl von Endnutzern anzeigt, die an den zwei oder mehr Subclustern teilnehmen.

8. Verfahren nach Anspruch 1, wobei das Verfahren weiterhin umfasst:

   Empfangen mindestens einer Cluster-Informationsanforderung, einer AbmeldeNachricht und einer Subcluster-Teilnahme-Nachricht von einer Vielzahl von Middleware-Knoten (104),
   Vergleichen der Anzahl von von der Vielzahl von Middleware-Knoten empfangenen Anforderungen mit einem vorbestimmten Replika-Schwellenwert; und
   Senden einer Antwort an die Vielzahl von Middleware-Knoten auf Grundlage des Vergleichs.

**9.** Middleware-Knoten (104), umfassend:

einen Knoten-Prozessor (108); und
ein Cluster-Analysemodul (124), das mit dem Prozessor (108) gekoppelt ist, wobei das Cluster-Analysemodul (124) konfiguriert ist zum Bestimmen der Anzahl von Endnutzern (102), die an einem Cluster teilnehmen, wobei der Cluster indikativ ist für eine Gruppe von Endnutzern, die ein gemeinsames Interesse haben; und
ein Cluster-Verwaltungsmodul (126), das mit dem Prozessor (108) gekoppelt ist, wobei das Cluster-Verwaltungsmodul (126) konfiguriert ist zum Splitten des Clusters in zwei oder mehr Subcluster, wenn die festgestellte Anzahl von Endnutzern größer ist als ein vorbestimmter Explore-Splitting-Schwellenwert und wobei die Anzahl von Endnutzern, die an zwei oder mehr Subclustern teilnehmen, größer ist als ein vorbestimmter Clustergrößenschwellenwert.

**10.** Middleware-Knoten (104) nach Anspruch 9, weiterhin umfassend ein Interaktionsmodul (128), das konfiguriert ist zum Anfordern von den Endnutzern, an mindestens einem der zwei oder mehr Subcluster teilzunehmen.

**11.** Middleware-Knoten (104) nach Anspruch 9, weiterhin umfassend ein Interaktionsmodul (128), das konfiguriert ist zum:

Senden einer Cluster-Informationsanforderung an die am Cluster teilnehmenden Endnutzer; und
Empfangen von Cluster-Information von den Endnutzern, wobei die Cluster-Information einen Subcluster aus den zwei oder mehr Subclustern anzeigt, an denen der Endnutzer teilzunehmen versucht.

**12.** Middleware-Knoten (104) nach einem beliebigen der Ansprüche 9 bis 11, wobei das Cluster-Verwaltungsmodul (126) weiterhin konfiguriert ist zum Verschmelzen der zwei oder mehr Subcluster in dem Cluster, wenn die Anzahl der Endnutzer, die an einem beliebigen der zwei oder mehr Subcluster teilnehmen, geringer ist als der vorbestimmte Clustergrößenschwellenwert.

**13.** Middleware-Knoten (104) nach einem beliebigen der Ansprüche 9 bis 12, wobei das Cluster-Analysemodul (124) weiterhin konfiguriert ist zum Initiieren einer Not-ready-to-split-Phase, wenn die festgestellte Anzahl von Endnutzern geringer ist als der vorbestimmte Explore-Splitting-Schwellenwert.

**14.** Computerlesbares Medium, das ein Computerprogramm enthält zum Ausführen des Verfahrens des datengeschützten dynamischen Clustering von Endnutzern, wobei das Verfahren umfasst:

Feststellen der Anzahl von Endnutzern, die an einem Cluster teilnehmen, wobei der Cluster indikativ ist für eine Gruppe von Endnutzern, die ein gemeinsames Interesse haben; und
Splitting des Clusters in zwei oder mehr Subcluster, wenn die festgestellte Anzahl von Endnutzern größer ist als ein vorbestimmter Explore-Splitting-Schwellenwert, wobei die Anzahl von Endnutzern, die an den zwei oder mehr Subclustern teilnehmen, größer ist als ein vorbestimmter Clustergrößenschwellenwert.

**15.** Computerlesbares Medium nach Anspruch 14, wobei das Verfahren weiterhin umfasst:

Empfangen mindestens einer Cluster-Informationsanforderung, einer Abmeldenachricht und einer Subcluster-Teilnahme-Nachricht von einer Vielzahl von Middleware-Knoten (104),
Vergleichen der Anzahl von von der Vielzahl von Middleware-Knoten empfangenen Anforderungen mit einem vorbestimmten Replika-Schwellenwert; und
Senden einer Antwort an die Vielzahl von Middleware-Knoten auf Grundlage des Vergleichs.

**Revendications**

**1.** Procédé pour la mise en grappe dynamique à protection de la vie privée d'utilisateurs finals (102), le procédé comprenant les étapes suivantes :

établir (202) un nombre d'utilisateurs finals abonnés à une grappe, la grappe étant indicative d'un groupe d'utilisateurs finals ayant un intérêt commun ; et
séparer (216) la grappe en deux sous-grappes ou plus si le nombre établi d'utilisateurs finals est supérieur à un seuil d'exploration-séparation prédéterminé, un nombre d'utilisateurs finals abonnés aux deux sous-grappes ou plus étant supérieur à un seuil de taille de grappe prédéterminé.

**2.** Procédé selon la revendication 1, comprenant en outre l'initiation (218) d'une phase non prête à séparer pour le nombre établi d'utilisateurs finals qui est inférieur au seuil d'exploration-séparation prédéterminé.

**3.** Procédé selon l'une quelconque des revendications précédentes, comprenant en outre les étapes suivantes :

envoyer (210) une demande d'informations de mise en grappe aux utilisateurs finals abonnés à la grappe ; et recevoir (212) des informations de mise en grappe en provenance des utilisateurs finals, les informations de mise en grappe indiquant une sous-grappe parmi les deux sous-grappes ou plus à laquelle l'utilisateur final a l'intention de s'abonner.

**4.** Procédé selon l'une quelconque des revendications précédentes, le procédé comprenant en outre les étapes suivantes :

comparer (206), pour les deux sous-grappes ou plus, le nombre d'utilisateurs finals abonnés à la sous-grappe avec le seuil de taille de grappe prédéterminé ; fusionner (208), sur la base de la comparaison, les deux sous-grappes ou plus dans la grappe, pour le nombre d'utilisateurs finals abonnés à la sous-grappe qui est inférieur au seuil de taille de grappe prédéterminé.

**5.** Procédé selon l'une quelconque des revendications précédentes, le procédé comprenant en outre la demande aux utilisateurs finals de s'abonner à au moins une des deux sous-grappes ou plus.

**6.** Procédé selon la revendication 1, le procédé comprenant en outre les étapes suivantes :

recevoir un message d'abonnement en provenance d'un utilisateur final pour s'abonner à la grappe ; et envoyer un message d'abonnement à une sous-grappe à l'utilisateur final, sur la grappe qui est séparée en les deux sous-grappes ou plus, le message d'abonnement à une sous-grappe demandant à l'utilisateur final de s'abonner à l'une quelconque des deux sous-grappes ou plus.

**7.** Procédé selon la revendication 1, le procédé comprenant en outre les étapes suivantes :

fournir une pluralité de vecteurs aléatoires aux utilisateurs finals pour générer un identifiant de grappe correspondant, l'identifiant de grappe incluant une pluralité de bits, et la pluralité de bits indiquant la sous-grappe à laquelle l'utilisateur final s'abonne à un niveau particulier de hiérarchie de grappe ; recevoir, en provenance des utilisateurs finals, une pluralité de messages d'abonnement correspondant à la pluralité de vecteurs aléatoires pour s'abonner à l'une des deux sous-grappes ou plus ; et déterminer, sur la base de la réception, une meilleure condition de séparation pour séparer la grappe en les deux grappes ou plus, la meilleure condition de séparation indiquant une séparation de la grappe avec le nombre d'utilisateurs finals s'abonnant aux deux sous-grappes ou plus qui est le même.

**8.** Procédé selon la revendication 1, le procédé comprenant en outre les étapes suivantes :

recevoir au moins un parmi une demande d'informations de mise en grappe, un message de désabonnement, et un message d'abonnement à une sous-grappe en provenance d'une pluralité de noeuds intergiciels (104), comparer le nombre de demandes reçues en provenance de la pluralité de noeuds intergiciels avec un seuil de réplique prédéterminé ; et envoyer une réponse à la pluralité de noeuds intergiciels sur la base de la comparaison.

**9.** Noeud intergiciel (104) comprenant :

un processeur de noeud (108) ; et un module d'analyse de grappe (124) couplé au processeur (108), le module d'analyse de grappe (124) configuré pour établir un nombre d'utilisateurs finals (102) abonnés à une grappe, la grappe étant indicative d'un groupe d'utilisateurs finals ayant un intérêt commun ; et un module de gestion de grappe (126) couplé au processeur (108), le module de gestion de grappe (126) configuré pour séparer la grappe en deux sous-grappes ou plus si le nombre établi d'utilisateurs finals est supérieur à un seuil d'exploration-séparation prédéterminé, et un nombre d'utilisateurs finals abonnés aux deux sous-grappes ou plus est supérieur à un seuil de taille de grappe prédéterminé.

10. Noeud intergiciel (104) selon la revendication 9, comprenant en outre un module d'interaction (128) configuré pour demander aux utilisateurs finals de s'abonner à au moins une des deux sous-grappes ou plus.

11. Noeud intergiciel (104) selon la revendication 9, comprenant en outre un module d'interaction (128) configuré pour :

envoyer une demande d'informations de mise en grappe aux utilisateurs finals abonnés à la grappe ; et
recevoir des informations de mise en grappe en provenance des utilisateurs finals, les informations de mise en grappe indiquant une sous-grappe parmi les deux sous-grappes ou plus à laquelle l'utilisateur final a l'intention de s'abonner.

12. Noeud intergiciel (104) selon l'une quelconque des revendications 9 à 11, dans lequel le module de gestion de grappe (126) est en outre configuré pour fusionner les deux sous-grappes ou plus dans la grappe sur le nombre d'utilisateurs finals abonnés à l'une quelconque des deux sous-grappes ou plus qui est inférieur au seuil de taille de grappe prédéterminé.

13. Noeud intergiciel (104) selon l'une quelconque des revendications 9 à 12, dans lequel le module d'analyse de grappe (124) est en outre configuré pour initier une phase non prête à séparer pour le nombre établi d'utilisateurs finals qui est inférieur au seuil d'exploration-séparation prédéterminé.

14. Support lisible par ordinateur comportant sur lequel est incorporé un programme informatique pour exécuter un procédé de mise en grappe dynamique à protection de la vie privée d'utilisateurs finals, le procédé comprenant les étapes suivantes :

établir un nombre d'utilisateurs finals abonnés à une grappe, la grappe étant indicative d'un groupe d'utilisateurs finals ayant un intérêt commun ; et
séparer la grappe en deux sous-grappes ou plus si le nombre établi d'utilisateurs finals est supérieur à un seuil d'exploration-séparation prédéterminé, un nombre d'utilisateurs finals abonnés aux deux sous-grappes ou plus étant supérieur à un seuil de taille de grappe prédéterminé.

15. Support lisible par ordinateur selon la revendication 14, dans lequel le procédé comprend en outre les étapes suivantes :

recevoir au moins un parmi une demande d'informations de mise en grappe, un message de désabonnement, et un message d'abonnement à une sous-grappe en provenance d'une pluralité de noeuds intergiciels (104), comparer le nombre de demandes reçues en provenance de la pluralité de noeuds intergiciels avec un seuil de réplique prédéterminé ; et
envoyer une réponse à la pluralité de noeuds intergiciels sur la base de la comparaison.

# Figure 1(a)

# Figure 1(b)

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8135718 B1